# EUROPÄISCHE PATENTANMELDUNG

(11) **EP 1 782 681 A1**
(43) Veröffentlichungstag der Anmeldung: **09.05.2007**
(21) Anmeldenummer: 06022186.8
(22) Anmeldetag: 24.10.2006
(51) Int. Cl.: A01G 3/053

(54) **Messerbalken einer durch einen Motor angetriebenen Heckenschere**

(30) Priorität: 08.11.2005 DE 102005053126
(71) Anmelder: Andreas Stihl AG & Co. KG, 71336 Waiblingen (DE)
(72) Erfinder: Carls, Winfried, 54568 Gerolstein (DE)
(74) Vertreter: Wasmuth, Rolf

(57) **Zusammenfassung**

Die Erfindung betrifft einen Messerbalken (3) einer durch einen Motor (2) angetriebenen Heckenschere (1) sowie eine Heckenschere (1) mit einem derartigen Messerbalken (3). Der Messerbalken (3) umfasst eine tragende Messerschiene (4) und mindestens ein an der Messerschiene (4) in einer Längsrichtung (10) oszillierend verschiebbar geführtes Schermesser (5) mit in einer Seitenrichtung (27) hervorstehenden Schneidzähnen (7). Mindestens ein Schneidzahn (7) weist an seinem äußeren Ende (13) mindestens einen in der Seitenrichtung (27) hervorstehenden Sägezahn (12) auf.

## Beschreibung

Die Erfindung betrifft einen Messerbalken einer durch einen Motor angetriebenen Heckenschere mit den Merkmalen nach dem Oberbegriff des Anspruchs 1 sowie eine Heckenschere mit einem entsprechenden Messerbalken.

Heckenscheren mit einem Antriebsmotor in Form eines Verbrennungsmotors oder eines Elektromotors weisen einen Messerbalken zum Schneiden von Geäst einer Hecke oder dergleichen auf. Der Messerbalken umfaßt eine gerätefeste, tragende Messerschiene, an der mindestens ein Schermesser oszillierend verschiebbar geführt ist. Das Schermesser weist seitlich hervorstehende, eine Messerebene aufspannende Schneidzähne auf und wird durch den Antriebsmotor in der Längsrichtung des Messerbalkens hin- und herbewegt. Weitere Schneidzähne sind entweder ortsfest an der Messerschiene oder an einem weiteren, gegenläufigen Schermesser angeordnet. Seitwärts zwischen die Schneidzähne eingeführte Äste werden zwischen den gegenläufigen Schermessern geschnitten.

Der Abstand zwischen den Schneidzähnen und auch die verfügbare Motorleistung limitieren den Querschnitt der Äste bzw. Zweige, die geschnitten werden können. Beim Beschneiden von Hecken, Büschen oder dgl. kann es vorkommen, dickere Äste kürzen zu müssen, die mit den Schermessern der Heckenschere nicht durchtrennt werden können. Es muß hierzu eine Handsäge oder eine motorisch angetriebene Kettensäge verwendet werden. Neben dem zusätzlichen Werkzeugaufwand ist es insbesondere nachteilig, daß der Bewegungsfreiraum für das zusätzliche Sägewerkzeug durch die umliegenden Zweige und Äste eingeschränkt ist.

Aus der EP 0 422 773 B1 ist eine Heckenschere bekannt, bei der ein einzelnes oszillierend bewegliches Schermesser bezogen auf seine Längsrichtung in zwei Abschnitte aufgeteilt ist. Im vom Motor entfernten Abschnitt sind Schneidzähne in der bei Heckenscheren üblichen Form angebracht. Diese Schneidzähne fehlen in einem motornahen Abschnitt des Schermessers, in dem statt dessen ein Sägeabschnitt angebracht ist. Mit den Sägezähnen des oszillierend angetriebenen Sägeabschnittes lassen sich auch dickere Äste durchsägen. Nachteilig ist hier, daß dünne, elastische Zweige in der Nähe des auszuführenden Sägeschnittes den Sägevorgang behindern können. Bei den wahlweise vorgesehenen Betriebsarten entweder im Scherbetrieb oder im Sägebetrieb können die jeweils nicht genutzten Abschnitte des Schermessers die gerade ausgeführte Arbeit behindern.

Der Erfindung liegt die Aufgabe zugrunde, einen gattungsgemäßen Messerbalken derart weiterzubilden, daß der ausführbare Bereich von Schnittaufgaben erweitert ist.

Diese Aufgabe wird durch einen Messerbalken mit den Merkmalen des Anspruchs 1 gelöst.

Der Erfindung liegt darüber hinaus die Aufgabe zugrunde, eine Heckenschere mit verbesserter Schnittleistung anzugeben.

Diese Aufgabe wird durch eine Heckenschere mit den Merkmalen des Anspruchs 8 gelöst.

Es wird ein Messerbalken einer durch einen Motor angetriebenen Heckenschere bzw. eine Heckenschere mit einem derartigen Messerbalken vorgeschlagen, wobei der Messerbalken eine tragende Messerschiene und ein an der Messerschiene in einer Längsrichtung oszillierend verschiebbar geführtes Schneidmesser mit in einer Seitenrichtung hervorstehenden Schneidzähnen umfasst. Nach der Erfindung ist vorgesehen, daß mindestens ein Schneidzahn an seinem äußeren Ende mindestens einen in der Seitenrichtung hervorstehenden Sägezahn aufweist. Entsprechend ausgeführte Schneidzähne erfüllen hier eine gegenseitig sich ergänzende Doppelfunktion. Mit ihnen kann sowohl ein konventioneller Scherenbetrieb zum Abtrennen dünner Zweige oder Äste als auch ein Sägebetrieb zum Durchtrennen dickerer Äste vorgenommen werden. Die vorgenannte Doppelfunktion erlaubt ein einfaches Arbeiten mit erhöhtem Bewegungsfreiraum. Der Messerbalken kann in dichtes Buschwerk eingeführt werden, wobei dünne Zweige durch Scherung abgetrennt werden. Der oder die äußeren Sägezähne unterstützen den Schnittvorgang. Sobald der Messerbalken auf einen dickeren Ast oder dgl. trifft, beginnt selbsttätig ohne Lageveränderung der Heckenschere ein Sägevorgang, der den Ast zuverlässig durchtrennt. Umliegende dünnere Zweige werden gleichzeitig durch Scherung mit durchtrennt und behindern dabei den Sägevorgang nicht.

In vorteilhafter Weiterbildung weisen mehrere auf einer Seite des Schermessers zueinander benachbarte Schneidzähne an ihren äußeren Enden jeweils mindestens einen Sägezahn auf. Über die Längserstreckung der benachbarten Schneidzähne bildet sich ein Sägebereich aus, der durch die oszillierende Hubbewegung des Schermessers abgedeckt wird. Neben einem vergrößerten Sägebereich wird auch erreicht, daß die benachbarten Schneidzähne unter Beibehaltung ihrer Scherwirkung an ihren äußeren Enden vergleichbar zu einem durchgehenden Sägeblatt eine durchgehende, geradlinige Schnittlinie bilden, die eine ruhige, präzise Schnittführung erleichtern. Zur Unterstützung dieses Effektes kann es zweckmäßig sein, daß zwei oder mehr Sägezähne an einem äußeren Ende eines Schneidzahnes angeordnet sind.

Das Schermesser weist zweckmäßig auf beiden gegenüberliegenden Seiten Sägezähne auf. Der Benutzer kann den Messerbalken in beiden Seitenrichtungen nach Belieben in das zu beschneidende Geäst eintauchen. Eine Lageänderung der Heckenschere beim Auftreffen auf dickere Äste ist nicht erforderlich.

In einer vorteilhaften Ausführung sind zwei in der Längsrichtung oszillierend gegeneinander verschiebbar geführte Schermesser vorgesehen, bei denen einander zugeordnete Schneidzähne beider Schermesser an ihren äußeren Enden jeweils mindestens einen Sägezahn aufweisen. Die Sägezähne der einander zugeordneten Schneidzähne bewegen sich dabei ebenso wie die zugehörigen Schermesser gegenläufig. In Verbindung mit ihrer unmittelbaren räumlichen Nähe zueinander heben sich die auftretenden Schnittkräfte zumindest näherungsweise gegenseitig auf. Eine unerwünschte Schwingungsanregung des zu durchtrennenden Astes sowie Reaktionskräfte am Messerbalken sind vermieden oder zumindest verringert.

Die Sägezähne der beiden gegenläufigen Schermesser können mit ihren Schneiden in der gleichen Schnittrichtung angeordnet sein, wobei die jeweiligen Sägezähne der beiden Schermesser infolge ihrer gegenläufigen Bewegung abwechselnd einen gleichgerichteten Schnitt ausführen. Bevorzugt sind die Sägezähne der beiden Schermesser gegenläufig zueinander angeordnet. Ihre Schneiden weisen in entgegengesetzte Richtungen. In Verbindung mit der Gegenläufigkeit der beiden Schermesser erfolgt ein Arbeitshub beider Schermesser gleichzeitig, indem die Sägezähne in entgegengesetzter Richtung gleichzeitig einen Sägeschnitt ausführen. Die dabei auftreten Schnittkräfte in der Hubrichtung bzw. in der Längsrichtung heben sich gegenseitig zumindest näherungsweise auf. Das Gleiche gilt auch für den zyklisch nachfolgenden Hub, der entgegen der Schneidrichtung erfolgt. Hierbei wird zwar kein Schnitt ausgeführt. Aber auch verbleibende Kräfte wie Reibkräfte oder Massenkräfte heben sich zumindest näherungsweise gegenseitig auf. Die Laufruhe und die Führungsgenauigkeit der Heckenschere ist gesteigert.

Zur weiteren Unterstützung von Laufruhe und Führungsgenauigkeit sind die Sägezähne der beiden Schermesser spiegelsymmetrisch zueinander bezogen auf die Seitenrichtung ausgebildet. Es ist sichergestellt, dass an den Sägezähnen beider Schneidmesser zumindest näherungsweise die gleichen Schnittkräfte bei gleicher Schnittleistung auftreten, was zum ruhigen und führungsgenauen Betrieb der Heckenschere beiträgt.

Ein Ausführungsbeispiel der Erfindung ist im folgenden anhand der Zeichnung näher beschrieben. Es zeigen:
- Fig. 1: eine perspektivische Darstellung einer Heckenschere mit einem Messerbalken, dessen Schneidzähne außenseitig mit Sägezähnen versehen sind;
- Fig. 2: in schematischer Darstellung eine vergrößerte Draufsicht des Messerbalkens nach Fig. 1 mit Einzelheiten zu den außenseitig an den vorderen Schneidzähnen angebrachten Sägezähnen;
- Fig. 3: eine vergrößerte Detailansicht der Schneidzähne nach Fig. 2 mit Einzelheiten der Sägezahngeometrie.

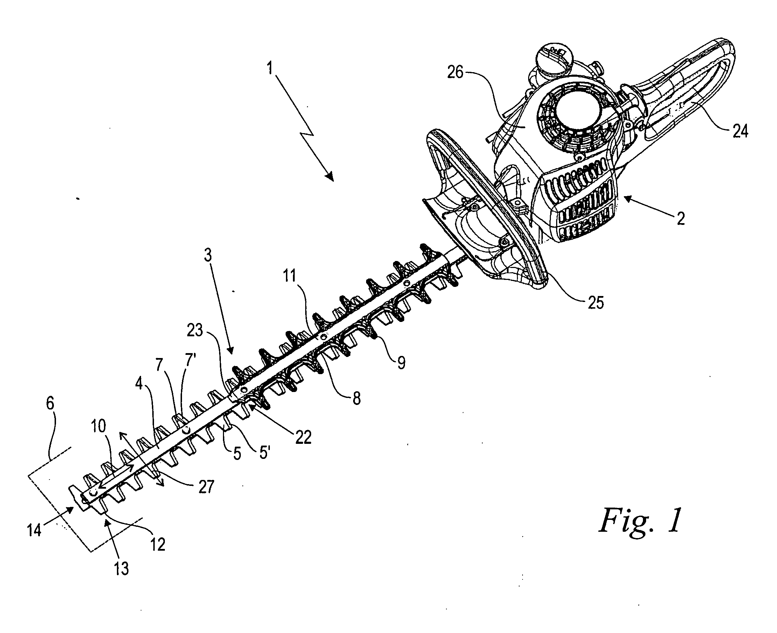

Die Heckenschere 1 nach Fig. 1 umfaßt einen Motorteil mit einem Motorgehäuse 26, in dem ein nicht näher dargestellter Motor 2 in Form eines Verbrennungsmotors zum Antrieb der Heckenschere 1 angeordnet ist. Es kann auch ein Elektromotor vorgesehen sein. Mit dem Motorteil ist ein Messerbalken 3 verbunden, der im Betrieb durch den Motor 2 angetrieben ist. Zum Führen der Heckenschere 1 sind auf der dem Messerbalken 3 zugewandten Seite des Motorteiles ein erster, bügelförmiger Handgriff 25 und auf der gegenüberliegenden Rückseite ein zweiter Handgriff 24 angeordnet.

Der Messerbalken 3 erstreckt sich in einer Längsrichtung 10 und umfaßt eine fest und starr mit dem Motorteil verbundene Messerschiene 4. An der Messerschiene 4 sind zwei gegenläufig antreibbare Schermesser 5, 5' in der Längsrichtung 10 verschiebbar geführt, wobei sie - angetrieben durch den Motor 2 - gegenläufige, in der Längsrichtung 10 oszillierende Bewegungen ausführen. Die Schermesser 5, 5' weisen beidseitig in einer Seitenrichtung 27 hervorstehende, eine Messerebene 6 aufspannende Schneidzähne 7, 7' auf, wobei die Schneidzähne 7 am Schermesser 5 und die Schneidzähne 7' am Schermesser 5' einteilig angeformt sind. Durch die gegenläufige, in der Längsrichtung 10 erfolgende Bewegung der Schneidzähne 7, 7' werden Zweige, die in die Zwischenräume zwischen den Schneidzähnen 7 eingeführt werden, geschnitten. Es kann auch eine Ausführung zweckmäßig sein, bei der nur ein einziges bewegliches Schermesser 5 vorgesehen ist, wobei entsprechend gegenhaltende Schneidzähne an der festen Messerschiene 4 angeordnet sind.

Der Messerbalken 3 ist in seinem an den vorderen Handgriff 25 angrenzenden Längsbereich mit einem Schnittschutz 8 versehen, der aus einem mittigen, sich in der Längsrichtung 10 erstrekkenden Längsträger 11 und durch beidseitig hervorstehende Schutzfinger 9 gebildet ist. Es kann auch eine Anordnung vorteilhaft sein, bei der sich der Schnittschutz 8 über die gesamte Länge des Messerbalkens 3 erstreckt. Der Schnittschutz 8 mit seinem Längsträger 11 und den Schutzfingern 9 ist einteilig aus einem schlagzähen Kunststoff gefertigt und fest, also unbeweglich mit der Messerschiene 4 verbunden. An seinem dem Handgriff 25 abgewandten, freien Ende 22 ist der Längsträger 11 mit einer Schräge 23 versehen, die in der Längsrichtung 10 ausgehend von der Oberfläche der Messerschiene 4 ansteigt und dadurch eine Auffädelungshilfe für einen Transportschutz bildet, der bedarfsweise auf den Messerbalken 3 aufgeschoben werden kann.

Die Schutzfinger 9 liegen parallel zur Messerebene 6 mit geringem Abstand darüber, demnach die oszillierende Bewegung der Schneidzähne 7 mit geringem Abstand unterhalb der Schneidzähne 7 ungehindert erfolgen kann.

Die Schneidzähne 7, 7' und die Schutzfinger 9 erstrecken sich in der quer zur Längsrichtung 10 liegenden Seitenrichtung 27, wobei durch die Längsrichtung 10 und die Seitenrichtung 27 die Lage der Messerebene 6 definiert ist.

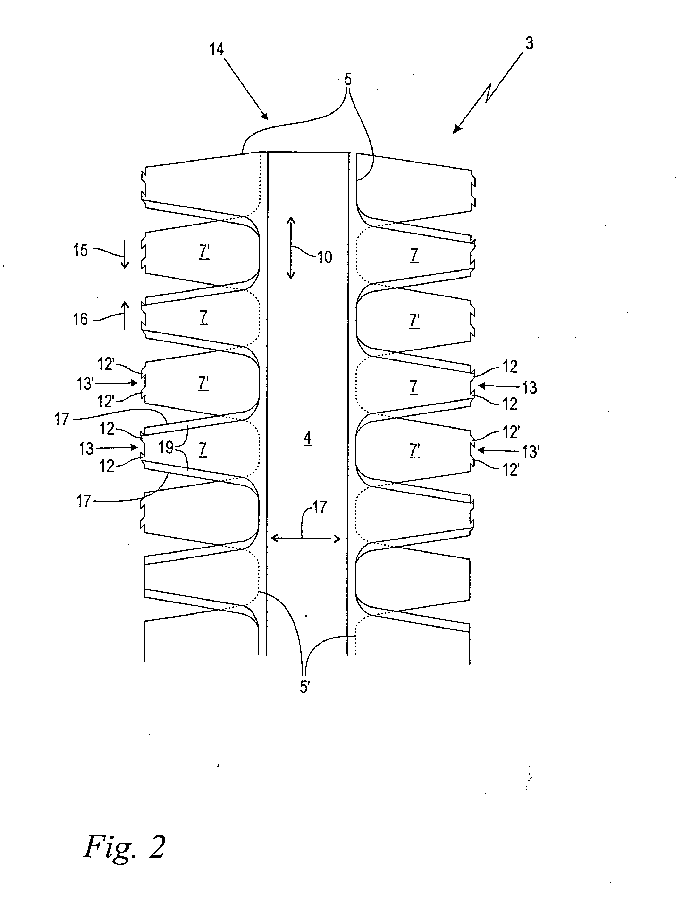

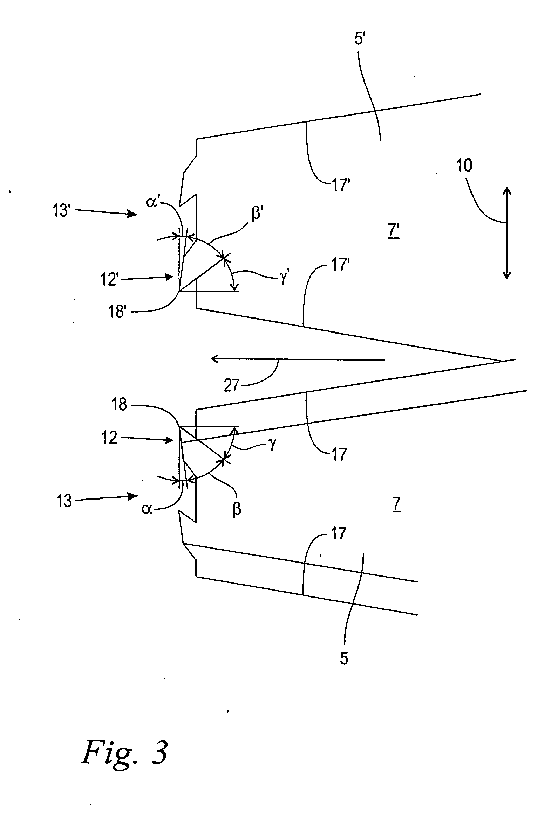

Im Bereich eines freien Endes 14 des Messerbalkens 3 ist ein Teil der Schneidzähne 7, 7' an zugeordneten äußeren Enden 13 mit in der Seitenrichtung 27 hervorstehenden, hier der besseren Übersichtlichkeit halber nicht näher gezeigten Sägezähnen 12 versehen. Die Ausgestaltung der Sägezähne 12 ist im Zusammenhang mit den Fig. 2 und 3 näher beschrieben.

Im Betrieb führt der Benutzer den Messerbalken 3 nach Belieben in eine der Seitenrichtungen 27 in das zu schneidende Geäst. Dabei gelangen dünne Zweige in die Zwischenräume zwischen die Schneidzähne 7, 7' und werden mit den daran angeordneten, in Fig. 3 gezeigten Messerschneiden 17, 17' durch Scherung abgetrennt. Hierzu steht der gesamte Längenbereich des Messerbalkens 3 einschließlich dem Bereich des Schnittschutzes 8 zur Verfügung. Beim Auftreffen auf dickere Gegenstände wie Äste oder dgl. verhindert der Schnittschutz 8 eine Berührung mit den Schneidzähnen 7, 7'. Dickere Äste, die im Bereich des freien Endes 14 des Messerbalkens 3 in der Seitenrichtung 27 auf die äußeren Enden 13 der Schneidzähne 7, 7' treffen, werden durch die daran angeordneten Sägezähne 12 sägend durchtrennt, während umliegende dünnere Äste gleichzeitig durch die Messerschneiden 17, 17' (Fig. 3) der Schneidzähne 7, 7' abgeschert werden.

Fig. 2 zeigt eine schematische Draufsicht des Messerbalkens 3 nach Fig. 1 im Bereich seines freien Endes 14. Das Schermesser 5 ist beidseitig der Messerschiene 4 mit einer Vielzahl von einteilig angeformten Schneidzähnen 7 versehen, die sich in der Seitenrichtung 17 erstrecken. Das weitere Schermesser 5 ist im wesentlichen identisch dazu aufgebaut, wobei seine Schneidzähne 7' gegenüber den Schneidzähnen 7 des Schermessers 5 in der Längsrichtung 10 gegeneinander versetzt sind.

Die Schneidzähne 7 sind bezogen auf die Längsrichtung 10 auf beiden Seiten mit Schrägflächen 19 versehen, die von der hier gezeigten Oberseite aus in jeweils eine Messerschneide 17 auslaufen. Vergleichbar dazu sind die Schneidzähne 7' auf der nicht dargestellten Unterseite mit entsprechenden, hier ebenfalls nicht dargestellten Schrägflächen versehen, wodurch die in Fig. 3 dargestellten Messerschneiden 17' gebildet werden. Die beiden Schermesser 5, 5' liegen spielfrei aufeinander, in dessen Folge die in Fig. 3 dargestellten Messerschneiden 17, 17' aufeinander gleiten und eine Scherbewegung zum Durchtrennen dünnerer Äste ausführen.

Die beiden Schermesser 5, 5' sind gegenläufig in der Längsrichtung 10 oszillierend angetrieben, demnach bei einer Bewegung der Schneidzähne 7 in Richtung eines Pfeiles 16 eine gleichzeitige Bewegung der Schneidzähne 7' in Richtung eines Pfeiles 15 erfolgt. Bezogen auf die Messerschiene 4 sind die Bewegungsgeschwindigkeiten der beiden Schermesser 5, 5' gleich groß, aber in entgegengesetzter Richtung.

Die Schneidzähne 7, 7' beider Schermesser 5, 5' sind an ihren äußeren Enden 13, 13' mit in der Seitenrichtung 27 hervorstehenden Sägezähnen 12, 12' versehen. Dabei sind an den einzelnen äußeren Enden 13, 13' im gezeigten Ausführungsbeispiel jeweils insgesamt zwei Sägezähne 12, 12' angeordnet. Es kann auch eine abweichende Anzahl von Sägezähnen 12, 12' zweckmäßig sein. Die Sägezähne 12, 12' sind an den Schneidzähnen 7, 7' beideitig der Messerschiene 4, also auf beiden Längsseiten der Schermesser 5, 5' angeordnet. Es kann auch eine einseitige Anordnung zweckmäßig sein.

Im gezeigten Ausführungsbeispiel sind jeweils drei in der Längsrichtung 10 zueinander benachbarte Schneidzähne 7 auf je einer Seite der Messerschiene 4 mit Sägezähnen 12 versehen, wobei diese Schneidzähne 7 unmittelbar an das freie Ende 14 angrenzen. Das Gleiche gilt für die Schneidzähne 7' des Schermessers 5' mit den Sägezähnen 12', demnach insgesamt zwölf Schneidzähne 7, 7' mit Sägezähnen 12, 12' versehen sind. Es kann auch zweckmäßig sein, eine abweichende, insbesondere größere Anzahl von Schneidzähnen 7, 7' mit Sägezähnen 12, 12' auszustatten, die insbesondere den in Fig. 1 gezeigten Längsbereich vom freien Ende 14 bis zum Schnittschutz 8 abdecken.

Es ist zu erkennen, daß die Schrägflächen 19 von dem an die Messerschiene 4 angrenzenden Wurzelbereich der Schneidzähne 7 in der Seitenrichtung 17 bis zu deren äußeren Enden 13 verlaufen und dabei auch die Sägezähne 12 überstreichen. Die Messerschneiden 17 gehen dadurch im Eckbereich an den äußeren Enden 13 direkt in den angrenzenden Sägezahn 12 über.

Der zeichnerischen Darstellung nach Fig. 2 ist zu entnehmen, daß im Scherbetrieb jeweils ein Paar von einander zugeordneten Schneidzähnen 7, 7' miteinander zusammenwirkt. Jedes dieser hier gezeigten Paare ist mit bezogen auf die Längsrichtung 10 gegenläufig angeordneten Sägezähnen 12, 12' versehen, die im Sägebetrieb ebenfalls zusammenwirken. In Zusammenschau mit der Darstellung nach Fig. 3 führen Sägeschneiden 18 der Sägezähne 12 bei einer Bewegung in Richtung des Pfeiles 16 einen Sägeschnitt aus, während gleichzeitig Sägeschneiden 18' der Sägezähne 12' in der Gegenrichtung entsprechend dem Pfeil 15 bewegt werden und ebenfalls einen Sägeschnitt ausführen. Die dabei in Richtung der Pfeile 15, 16 bzw. in der Längsrichtung 10 auftretenden Schnittkräfte heben sich näherungsweise gegenseitig auf.

Fig. 3 zeigt eine vergrößerte Ansicht zweier Schneidzähne 7, 7' der Anordnung nach Fig. 2 im Bereich ihrer äußeren Enden 13, 13'. Es ist zu erkennen, daß die Geometrie der Sägezähne 12 mit ihren Sägeschneiden 18 durch einen Freiwinkel α, einen Keilwinkel β und einen Spanwinkel γ gebildet sind. Die vorgenannten Winkel liegen in der Messerebene 6 nach Fig. 1, demnach die Sägeschneiden 18, 18' zumindest näherungsweise in der senkrecht auf der Messerebene 6 stehenden Hochrichtung verlaufen. Der Keilwinkel β ist derart gewählt, daß nach gängiger Definition bezogen auf die Seitenrichtung 27 und die Längsrichtung 10 ein positiver Freiwinkel α und ein positiver Spanwinkel γ gebildet ist. Es kann auch eine abweichende Schneidengeometrie zweckmäßig sein.

Die Sägezähne 12' mit den Schneiden 18' weisen einen Freiwinkel α', einen Keilwinkel β' und einen Spanwinkel γ' auf, die identisch zum Freiwinkel α, zum Keilwinkel β bzw. zum Spanwinkel γ der Sägezähne 12 sind, jedoch gegenläufig angeordnet sind. Dies führt dazu, daß die Sägezähne 12 des Schermessers 5 und die Sägezähne 12' des weiteren Schermessers 5' spiegelsymmetrisch zueinander bezogen auf die Seitenrichtung 20 als Spiegelachse ausgebildet sind, wobei die jeweils einander zugeordneten Sägeschneiden 18, 18' aufeinander zuweisen.

Die Sägezähne 12, 12' weisen in ihrer Dickenrichtung einen konstanten, hier gezeigten Grundriß auf. Es kann auch zweckmäßig sein, die Sägezähne 12, 12' in der Dickenrichtung schräg anzuschleifen. Hierbei können entweder ein Paar von Sägezähnen 12 oder von Sägezähnen 12' als Wechselzähne ausgebildet sein. Ebenso kann es vorteilhaft sein, die Sägezähne 12 bezogen auf die Dickenrichtung spiegelsymmetrisch zu den zugeordneten Sägezähnen 12' auszuführen, wobei die Sägezähne 12 mit den zugeordneten Sägezähnen 12' eine Wechselzahnanordnung bilden.

## Patentansprüche

1. Messerbalken (3) einer durch einen Motor (2) angetriebenen Heckenschere (1), umfassend eine tragende Messerschiene (4) und ein an der Messerschiene (4) in einer Längsrichtung (10) oszillierend verschiebbar geführtes Schermesser (5) mit in einer Seitenrichtung (27) hervorstehenden Schneidzähnen (7),
**dadurch gekennzeichnet, daß** mindestens ein Schneidzahn (7) an seinem äußeren Ende (13) mindestens einen in der Seitenrichtung (27) hervorstehenden Sägezahn (12) aufweist.

2. Messerbalken nach Anspruch 1,
**dadurch gekennzeichnet, daß** mehrere auf einer Seite des Schermessers (5) zueinander benachbarte Schneidzähne (7) an ihren äußeren Enden (13) jeweils mindestens einen Sägezahn (12) aufweisen.

3. Messerbalken nach Anspruch 1 oder 2,
**dadurch gekennzeichnet, daß** das Schermesser (5) auf beiden gegenüberliegenden Seiten Schneizähne (7) mit Sägezähnen (12) aufweist.

4. Messerbalken nach einem der Ansprüche 1 bis 3,
**dadurch gekennzeichnet, daß** zwei in der Längsrichtung (10) oszillierend gegeneinander verschiebbar geführte Schermesser (5, 5') vorgesehen sind, bei denen einander zugeordnete Schneizähne (7, 7') beider Schermesser (5, 5') an ihren äußeren Enden (13, 13') jeweils mindestens einen Sägezahn (12, 12') aufweisen.

5. Messerbalken nach Anspruch 4,
**dadurch gekennzeichnet, daß** die Sägezähne (12) des Schermessers (5) und die Sägezähne (12') des weiteren Schermessers (5') gegenläufig angeordnet sind.

6. Messerbalken nach Anspruch 5,
**dadurch gekennzeichnet, daß** die Sägezähne (12) des Schermessers (5) und die Sägezähne (12') des weiteren Schermessers (5') spiegelsymmetrisch zueinander bezogen auf die Seitenrichtung (27) ausgebildet sind.

7. Messerbalken nach einem der Ansprüche 1 bis 6,
**dadurch gekennzeichnet, daß** der Schneidzahn (7) an seinem äußeren Ende (13) zwei oder mehr Sägezähne (12) aufweist.

8. Heckenschere (1) mit einem Messerbalken (3) nach einem der Ansprüche 1 bis 7.
